Europäisches Patentamt

European Patent Office

Office européen des brevets

(11) Publication number: **0 108 447**
**A2**

# EUROPEAN PATENT APPLICATION

(21) Application number: **83201544.0**

(22) Date of filing: **28.10.83**

(51) Int. Cl.³: **G 01 N 23/207**
**G 01 N 23/223**

(30) Priority: **04.11.82 US 439234**

(43) Date of publication of application:
**16.05.84 Bulletin 84/20**

(84) Designated Contracting States:
**CH DE FR GB LI NL**

(71) Applicant: **North American Philips Corporation**
**100 East 42nd Street 9th Floor**
**New York, N.Y. 10017(US)**

(72) Inventor: **Jenkins, Ronald**
**c/o INT. OCTROOIBUREAU B.V. Prof. Holstlaan 6**
**NL-5656 AA Eindhoven(NL)**

(74) Representative: **Scheele, Edial François et al,**
**INTERNATIONAAL OCTROOIBUREAU B.V. Prof.**
**Holstlaan 6**
**NL-5656 AA Eindhoven(NL)**

(54) Simultaneous collection of diffraction and spectrographic data.

(57) An arrangement is provided for the simultaneous collection of both diffraction and spectrographic data in which diffracted radiation 4 from a source 2 is directed, via specimen 1, onto a proportional detector 6, and characteristic fluorescent emission 5 from the specimen is also directed to the proportional detector. Selection is made by means of a computer controlled pulse height selector 7 of either the diffracted photons from the source or the fluoresced photons from the specimen during quantitative data collection scan, and the diffracted photon and fluorescent photon measurements are stored in different data files 8, 9 for evaluation of the specimen.

FIG.1

EP 0 108 447 A2

0108447

PHA 21 127                    1                    4-10-1983

"Simultaneous collection of diffraction and spectrographic data."


The present invention involves a system for simultaneously obtaining diffraction type data and spectrographic type data in analyses of materials. In particular, the present invention involves the use of a proportional detector structure for simultaneous collection of diffracted radiation and fluorescent radiation from a specimen being irradiated, and thereafter selecting either the diffracted radiation or the fluorescent radiation for analysis. A proportional detector produces an output pulse height proportional to the energy of the incident photon.

It is estimated that several million atomic arrangements are present on the earth, and each of these arrangements will give a diffraction pattern which is unique to that arrangement. Because of the large number of possibilities, great similarities may exist between single phases leading to an even greater difficulty in the analysis of multiple phases.

In recent years, considerable interest has evolved in the combination of spectrometry with X-ray diffraction arrangements. This interest has occurred because of the fact that the X-ray fluorescence method offers additional information which can aid in the phase identification process. Because the success or failure of correctly interpreting diffraction data depends on many factors, including the experience of the experimenter, the quality of the data in the unknown pattern, preconceived ideas as to the probable composition of the specimen, and the availability of other information about the specimen, considerable difficulty has evolved in making qualitative identification. For example, the majority of analytical problems involve multi-phase materials wherein the greatest problem in qualitative identification is the unscrambling of the various phase patterns to allow

0108447

matches to be made with a file of standard reference patterns of pure materials which contains about 30,000 entries. Since most phases will given some 10 to 30 lines in the angular region of identification, and since each of these lines has a half-height width of about $0.3^{\Omega}$ in the diffracted beam, a four to five phase mixture may given an extremely complex diffractogram with many line super-positions. Moreover the possibility exists of line broadening and line displacements due to instrumental or specimen artifacts.

Prior art attempts at combining X-ray diffractometry and X-ray spectrometry have been made especially in the areas of energy dispersive spectrometry and wavelength-dispersive diffractometry. See, for example, R. Jenkins, INTERDEPENDENCE OF X-RAY DIFFRACTION AND X-RAY FLUORESCENCE DATA, Advances in X-ray Analysis, Vol. 21, pages 7-21, 1978; and R. Jenkins, THE ROLE OF THE ENERGY DISPERSIVE DETECTOR IN X-RAY DIFFRACTOMETRY, Proc. A.C.A. Workship, pages 43-54, 1977. As are emphasized in these prior art references, spectrographic and diffractometry type instrumentation can be combined only with some difficulty.

'The present invention involves an arrangement for simultaneously collecting diffraction and spectrographic data by the use of a proportional detector which collects characteristic diffracted photons and fluorescent photons from a specimen being irradiated. This proportional detector is connected to a computer controlled programmable pulse height selector to select either diffracted primary photons from the source of fluoresced characteristic photons from the specimen. The computer control can be arranged so that the diffracted primary photons or the fluoresced characteristic photons are sampled in one hundredth of a second so that viewing of both appears to be simultaneous.

By this arrangement, simultaneous collection of diffraction and fluorescence emission data can be obtained in order to provide both diffraction data and fluores-

0108447

cence emission data in those cases where use of additional elemental data is critical to obtaining accurate analysis such as, for example, in the study of pot-flux samples. In particular, the controlled pulse-height selector can provide selection during a quantitative data collection scan, and fluorescence emission and diffracted photon measurements can be stored in different data files for work-up at the end of the data collection. This enables a quantitative phase analysis where the diffraction data along is insufficient for complete solution.

In a preferred embodiment a second pulse-selector is added such that no loss of information occurs due to the alternate measurement of the height of the pulses.

The structure of the present invention may be more clearly seen by reference to the drawing figures which illustrate without limitation various aspects in schematic form of the arrangement of the present invention, and wherein

Figure 1 illustrates schematically an arrangement according to the present invention, and

Figure 2 illustrates in graphic form pulse measurements according to the present invention.

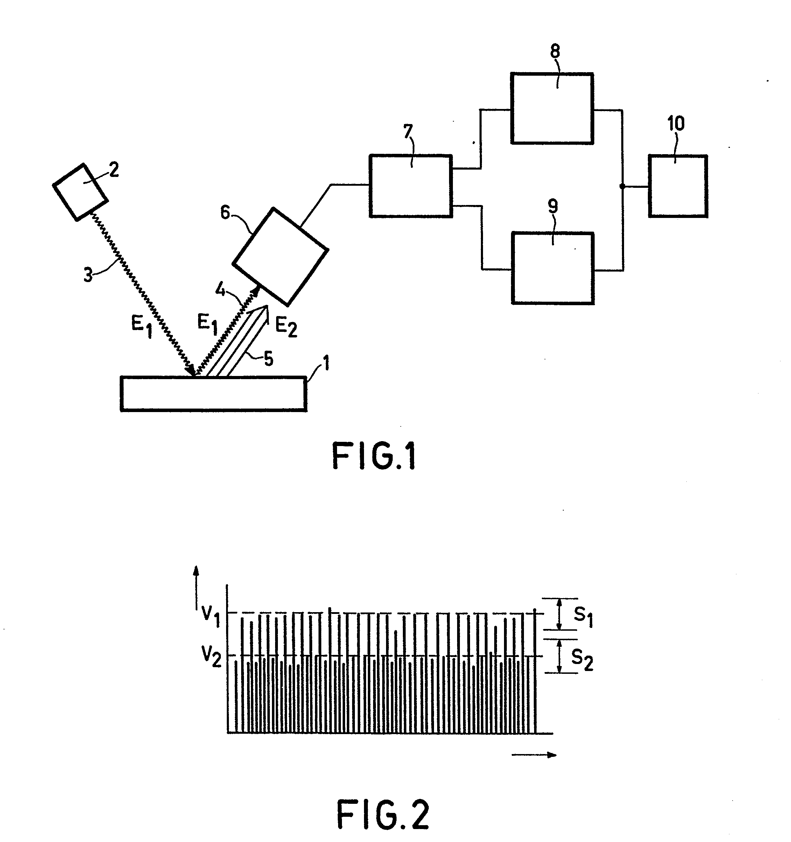

As may be seen in Figure 1, radiation 3 from a source 2 is directed onto a specimen 1 in the normal diffractormeter arrangement in which the specimen 1 is placed at the center of a gonimeter, with the normal to its surface making an angle $\theta$ with the primary beam. A proportional detector 6 is placed at an angle $2\theta$ from the primary beam in such a position as to collect diffracted primary photons 4. Also, fluorescent characteristic emission 5 is also directed into the same proportional detector 6. As shown in Fig. 2, the detector produces voltage pulses of sizes $V_1$ and $V_2$ relating to the energy $E_1$ and $E_2$ of the diffracted photons and fluorescent photons respectively.

In the voltage versus time graph shown in Figure 2, pulses of an average voltage level $V_1$ can be collected with a pulse height range of $S_1$, while pulses of an average

0108447

voltage level $V_2$ can be collected with a pulse height range of $S_2$. These values give a distinct indication and separation of diffracted photons from fluorescent photons.

A computer controlled, programmable pulse height selector 7 is used to select either diffracted photons from a source or fluoresced photons from the specimen. This selection is made during a quantitative data collection scan, and both diffracted photons and fluorescence emission are stored in different data files, i.e. in the data files 8 and 9 of the computer 10. In this manner, simultaneous collection of diffraction data and fluorescence emission data are obtained.

While various arrangements and features of the present invention have been illustrated and described, the present invention includes all modifications and variations which may be evident from the claims.

0108447

## CLAIMS

1.      An arrangement for simultaneous collection of diffraction and spectrographic data comprising a radiation source, a specimen receiving radiation from said source, said specimen providing both diffracted radiation from said source and fluorescent radiation from said specimen, proportional detector means for simultaneously collecting said diffracted radiation and said fluorescent radiation, pulse height selection means for selecting either said diffracted radiation or said fluorescent radiation from said proportional detector means, and computing means for simultaneously storing diffraction and fluorescence emission data from said diffracted radiation and fluorescent radiation.

2.      An arrangement as claimed in claim 1, characterized in that a second pulse height selector is added.

FIG.1

FIG.2

PHA 21.127